# EUROPEAN PATENT SPECIFICATION

(11) **EP 2 945 211 B1**
(45) Date of publication and mention of the grant of the patent: **21.11.2018**
(21) Application number: 15167423.1
(22) Date of filing: 12.05.2015
(51) Int. Cl.: H01M 4/485, H01M 4/36, H01M 4/1391, H01M 4/131, H01M 4/04, H01M 10/0567, H01M 10/0525

(54) **LITHIUM TITANATE OXIDE AS NEGATIVE ELECTRODE IN LI-ION CELLS**
LITHIUMTITANATOXID ALS NEGATIVELEKTRODE IN LI-IONEN-ZELLEN
OXYDE DE TITANATE DE LITHIUM COMME ÉLECTRODE NÉGATIVE DANS DES CELLULES LITHIUM-ION

(30) Priority: 15.05.2014 US 201461993540 P
(43) Date of publication of application: 18.11.2015
(73) Proprietor: Saft Groupe S.A., 93170 Bagnolet (FR)
(72) Inventor: Chen, Yee Yvonne, Pikesville, MD 21208 (US); Greszler, Thomas, Phoenix, MD 21131 (US); Deveney, Bridget, Baltimore, MD 21218 (US)
(74) Representative: Hirsch & Associés

(56) References cited:
- EP-A2- 1 901 389
- EP-A2- 2 306 558
- WO-A1-2013/014830
- WO-A1-2013/033595
- DE-A1-102008 004 236
- JP-A- 2014 026 885
- US-A- 5 626 981
- US-A1- 2007 092 798
- US-A1- 2010 279 155
- US-A1- 2011 067 230
- US-A1- 2012 028 106
- US-A1- 2013 029 224
- US-A1- 2013 302 698
- US-A1- 2014 080 003
- US-A1- 2014 087 249
- US-A1- 2014 113 197

## Description

### BACKGROUND OF THE INVENTION

### Field of the Invention

The present invention relates to the improved operations of lithium-ion rechargeable cells and batteries having lithium titanate oxide (Li₄Ti₅O₁₂) as a negative electrode active material, particularly at operating temperatures above 35 °C. A battery may comprise one or more electrochemical cells. However, the terms battery and cell may be used interchangeably herein to mean a cell.

### Description of the Related Art

Most lithium-ion rechargeable cells and batteries that use lithium titanate oxide (Li₄Ti₅O₁₂) ("LTO") as a negative electrode active material have a limited operating and storage temperature. Typically, the operating and storage temperature of these cells with LTO-based chemistry is limited to temperatures below 35 °C. This is because of the problem of impedance growth on the positive electrode, which shows up as power fades, over the cycle and calendar life of the cells. The problem of impedance growth significantly limits the type of applications and/or the operating environment for batteries and cells with LTO-based chemistry. Alternatively, the problem of impedance growth requires environmental control for the battery, which increases system and operation complexity. Accordingly, a viable solution for mitigating or eliminating the impedance growth on the positive electrode of cells with LTO-based chemistry when the cells are operated at elevated temperatures (e.g., temperatures above 35 °C) has been highly sought after.

In conventional lithium-ion cells, carbon-based materials, such as graphite, are typically used as the negative electrode active material. To combat the problem of exfoliation suffered by this type of conventional lithium-ion cells, U.S. Patent No. 5,626,981 ("the '981 patent") teaches the use of an electrolyte additive for the purpose of forming a passivation layer on a surface of the carbon-based material of the negative electrode. According to the '981 patent, during the first charge of the cell (also known as the first formation cycle), a compound added to the electrolyte reduces at a potential which is higher than the intercalation potential of the solvated lithium ions. On reducing, it forms a passivation layer on the carbon-containing material before any intercalation of the lithium. The '981 patent states that this passivation layer then constitutes a physical barrier preventing intercalation of the solvent molecules surrounding the lithium ions. The lithium ion thus penetrates into the carbon by itself and exfoliation is said to be prevented.

In contrast to the cells using a graphite material as the negative electrode active material, a negative electrode with LTO-based chemistry is mechanically constant and undergoes little or no volume change. The LTO-based cells thus avoid the issues suffered by the conventional cells having a graphite-based negative electrode, such as cracking. Accordingly, for LTO-based cells, it was thought that there would be no reason to form the type of passivation layer taught by the '981 patent. In other words, the purpose of forming the passivation layer does not present itself in cells with LTO-based chemistry.

US 2011/067230 discloses a lithium-ion battery comprising a positive electrode, a negative electrode comprising lithium titanate oxide, an electrolyte comprising a solvent and an impedance growth reducing additive which can be selected from fluoroethylene carbonate, vinyl carbonate and vinyl ethylene carbonate, and a separator disposed between the positive electrode and the negative electrode. The negative electrode has the same or more capacity as the positive electrode.

WO 2013/033595 discloses a lithium-ion battery comprising a positive electrode, a negative electrode comprising lithium titanate oxide, an electrolyte comprising a solvent, an impedance growth reducing additive which can be fluoroethylene carbonate, and a separator disposed between the positive electrode and the negative electrode. This document discloses that all the cells are cathode limited, which means that the ratio of the negative electrode initial capacity to the positive electrode initial capacity is higher than 1.

WO 2013/014830 discloses a lithium-ion battery comprising a positive electrode, a negative electrode comprising lithium titanate oxide, an electrolyte comprising a solvent, and an impedance growth reducing additive which can be fluoroethylene carbonate, a separator disposed between the positive electrode and the negative electrode. This document does not disclose that the ratio of the negative electrode initial capacity to the positive electrode initial capacity is less than 1.

US 2014/113197 discloses a lithium-ion battery comprising a positive electrode, a negative electrode comprising lithium titanate oxide which can be coated with a layer of LiF, an electrolyte comprising a solvent, and a separator disposed between the positive electrode and the negative electrode. This document is silent about the ratio of the negative electrode initial capacity to the positive electrode initial capacity.

US 2010/0279155 discloses a lithium-ion battery comprising a positive electrode, a negative electrode comprising lithium titanate oxide, an electrolyte comprising a solvent and an electrolyte additive comprising at least one boroxine ring, such as trimethoxyboroxine, and a separator disposed between the positive electrode and the negative electrode. This document imposes that the electrolyte additive contains boron. It does not disclose that the additive be one of the following:
- fluoroethylene carbonate,
- a mixture of fluororethylene carbonate and vinyl carbonate,
- a mixture of fluoroethylene carbonate and vinyl ethylene carbonate,
- vinyl carbonate, and
- vinyl ethylene carbonate.

### BRIEF SUMMARY OF THE INVENTION

The present invention has been accomplished in view of the above problems. The inventors unexpectedly discovered that cells with LTO-based chemistry (i.e., cells with a negative electrode containing LTO as the active material) can operate at elevated temperatures- with minimum impedance growth on the cathode-by including an impedance growth reducing additive in the electrolyte and forming a stable interface layer comprising a LiF deposit on a surface of the negative electrode during a first formation cycle of the cell. Forming the stable interface layer on the negative electrode containing LTO as the material beneficially improves the cycle life and the output power capability over the life of these cells with LTO-based chemistry by mitigating impedance growth on the cathode.

One embodiment is directed to a lithium-ion battery, which includes a negative electrode (or anode) containing LTO as the negative electrode active material and a stable interface layer disposed on the surface, said stable interface layer comprising a LiF deposit; a positive electrode (or cathode); an electrolyte containing a solvent and an impedance growth reducing additive selected from the group consisting of: - fluoroethylene carbonate, - a mixture of fluoroethylene carbonate and vinyl carbonate, - a mixture of fluoroethylene carbonate and vinyl ethylene carbonate, - vinyl carbonate, and - vinyl ethylene carbonate; and a separator disposed between the positive electrode and the negative electrode, the ratio of the negative electrode initial capacity to the positive electrode initial capacity being less than 1. By including the impedance growth reducing additive in the electrolyte, a stable interface layer can be formed on a surface of the negative electrode. As described in more detail below, the stable interface layer is formed during a first formation cycle by dropping and holding the potential of the negative electrode to below the reduction potential of the impedance growth reducing additive in order to reduce the impedance growth reducing additive that has been added to the electrolyte.

In a preferred embodiment, the impedance growth reducing additive is fluoroethylene carbonate (C₃H₃FO₃) ("FEC"). It was found that the use of FEC as the impedance growth reducing additive provides a deposit of LiF on the negative electrode. The LiF material deposited on the negative electrode is an insulator and thus contributes to impedance growth on the negative electrode. However, the inventors unexpectedly found that a stable interface layer (or protective layer) including a LiF deposit material significantly reduces impedance growth on the positive electrode (cathode), particularly when the battery is operated and/or stored at elevated temperatures. In other words, it was found that the would-be larger impedance growth on the cathode could be avoided, which beneficially results in a smaller net impedance growth on the battery. Moreover, since the LTO material of the negative electrode is mechanically stable, no cracking has been observed on the LTO-based electrode despite a strong binding of the LiF deposit material.

In a preferred embodiment, the positive electrode includes LiMn₂O4 (referred to herein as "LMO") as the positive electrode active material. The high voltage profile of LMO is advantageous to couple with LTO. The stability of LMO and LTO during charge and discharge at room temperature allows a cell containing LTO as the negative electrode active material and at least LMO as the positive electrode active material to provide stable cycle life characteristics.

In another embodiment, a blend of FEC and vinyl carbonate (C₃H₂O₃) ("VC") is used as the impedance growth reducing additive or a blend of FEC and vinyl ethylene carbonate (C₅H₆O₃) ("VEC") is used as the impedance growth reducing additive. The addition of VC or VEC to electrolyte, along with FEC, can provide further advantageous properties to the stable interface layer formed on the negative electrode during the first formation cycle, such as the deposit of an organic material.

Another embodiment is directed to a method of making a lithium-ion cell or battery, such as the battery described in the preceding paragraphs, wherein during a first formation cycle (the first charge of the cell), the potential of the negative electrode is held below the reduction potential of an impedance growth reducing additive included in the electrolyte material form a stable interface layer on the surface of the negative electrode. The potential of the negative electrode is held in this manner to reduce the impedance growth reducing additive and thereby form the stable interface layer on the negative electrode.

### BRIEF DESCRIPTION OF THE FIGURES

Any figures contained herein are provided only by way of example and not by way of limitation.
FIG. 1 is a chart showing the cell impedance growth comparison between Examples 1-3 and Comparative Examples 1-2.
FIG. 2 is a chart showing the cathode impedance for Examples 1-3, Comparative Examples 1-2, and control cells.
FIG. 3 is a chart showing the anode impedance for Examples 1-3, Comparative Examples 1-2, and control cells.
FIG. 4 is a cross-sectional view of a lithium-ion cell showing a stable interface layer of a LiF deposit on a surface of the negative electrode.

### DETAILED DESCRIPTION OF THE INVENTION

It is to be understood that both the foregoing general description and the following detailed description are exemplary and are intended to provide further explanation of the invention claimed. Accordingly, various changes, modifications, and equivalents of the methods, apparatuses, and/or systems described herein will be apparent to those of ordinary skill in the art. Moreover, descriptions of well-known functions and constructions may be omitted for increased clarity and conciseness.

The terms used in the description are intended to describe embodiments only, and shall by no means be restrictive. Unless clearly used otherwise, expressions in a singular form include a meaning of a plural form. In the present description, an expression such as "comprising" or "including" is intended to designate a characteristic, a number, a step, an operation, an element, a part or combinations thereof, and shall not be construed to preclude any presence or possibility of one or more other characteristics, numbers, steps, operations, elements, parts or combinations thereof.

The general structure and the methods of making lithium-ion cells and batteries are well known. The cells may be prismatic (i.e., stacked electrode plates), cylindrical (i.e., spiral-wound or jelly roll electrodes), or other types, sizes, or configurations of electrochemical cells.

One embodiment is directed to a lithium-ion cell, which includes a negative electrode (or anode) including LTO as an active material and a stable interface layer disposed on the surface of the negative electrode, said stable interface layer comprising a LiF deposit; a positive electrode (or cathode); an electrolyte containing an
electrolyte and an impedance growth reducing additive selected from the group consisting of:
- fluoroethylene carbonate,
- a mixture of fluoroethylene carbonate and vinyl carbonate,
- a mixture of fluoroethylene carbonate and vinyl ethylene carbonate,
- vinyl carbonate, and
- vinyl ethylene carbonate; and a separator disposed between the positive electrode and the negative electrode, the ratio of the negative electrode initial capacity to the positive electrode initial capacity being less than 1.

The impedance growth reducing additive is included for the purpose of forming a stable interface layer on the negative electrode during a first formation cycle of the LTO-based cell. The stable interface layer significantly reduces impedance growth on the positive electrode over the cycle life of the cell.

Another embodiment is directed to a method of making a lithium-ion cell, such as the lithium-ion cell described above, wherein during a first cell formation cycle, the potential of the negative electrode is held below the reduction potential of the impedance growth reducing additive to reduce the impedance growth reducing additive and form the stable interface layer.

The individual components of the lithium ion battery or cell, and a method of making the same by way of an Example, are described below.

### Negative Electrode

The negative electrode (or anode) includes LTO as an active material. Otherwise, the structure of the negative electrode is not particularly limited and is typically obtained by disposing a negative electrode material (which includes the active material) on a current collector. To facilitate the connection between the active material and the collector, and for optimal electrical characteristics of the lithium-ion cells, the negative electrode material typically includes one or more additives, such as a binder, a conductive carbon, and a long chain carbon, which are described below.

The use of binders in the negative electrode material is known in the art, and the choice of a binder for use in the LTO-based cells described herein is not particularly limited. Suitable binders include, for example, polyvinylidene fluoride (referred to herein as PVDF). The binder is preferably present in the negative electrode material in an average amount of 5% by weight or less based on the total weight of the negative electrode material. Depending on the characteristics of the binder, the binder is preferably present an amount of 3 to 8% by weight based on the total weight of the negative electrode material.

The use of conductive carbon in the negative electrode material is known in the art, and the conductive carbon is not particularly limited. Suitable conductive carbons include, for example, acetylene black. The conductive carbon is preferably present in the negative electrode material in an average amount of 5% by weight or less based on the total weight of the negative electrode active material. Depending on the characteristics of the conductive carbon, the conductive carbon is preferably present in an amount of 1 to 10% by weight based on the total weight of the negative electrode active material. The conductive carbons may also be referred to herein by the term "conductive diluent" because the conductive carbons generally reduce the percentage of lithium storage material.

The use of a long chain carbon in the negative electrode material is known in the art and is not particularly limited. Suitable long chain carbons include, for example, carbon nanofibers, including carbon nanotubes (referred to herein as CNT) and vapor grown carbon fibers (referred to herein as VGCF). The long chain carbon is preferably present in the negative electrode material in an average amount of 2% by weight or less based on the total weight of the negative electrode active material.

The use of current collectors for the negative electrode is well known in the art and is not particularly limited. Preferable current collectors include, for example, copper, aluminum, aluminum alloy, or woven nanocarbon fiber cloth. The negative electrode includes a stable interface layer disposed on a surface(s) thereof. The stable interface layer is described in more detail below.

### Positive Electrode

The positive electrode (or cathode) for use in the LTO-based cells and method described herein is not particularly limited. The positive electrode includes a positive electrode material (which includes an active material) and a current collector.

The active material of the positive electrode material is not limited. However, the following active materials can be suitably utilized with the LTO-based cells described herein:
In a preferred embodiment, the active material contains LiMn₂O₄ (referred to herein as LMO).

In another embodiment, the active material for the positive electrode includes a combination of LMO and NCA (i.e., LMO/NCA), where NCA is LiMO₂ with M representing Ni_{0.8}CO_{0.15}Al_{0.05}.

In another embodiment, the active material for the positive electrode includes NMC (i.e., LMO/NMC), where NMC is LiMO₂ with M representing NiₓMn_{y}Co_{z} and 0.3<x<0.55, 0.3<y<0.4, and 0.14<z<0.34. In another embodiment, the active material for the positive electrode includes a combination of LMO and NMC.

In another embodiment, the active material for the positive electrode includes a ternary blend including at least two compounds chosen from LMO, LiMO₂, *x* Li[Li_{1/3}Mn_{2/3}]O₂ and (1-*x*) Li(Mn, Ni, Co)O₂, LiMnPO₄/LiMn₁₋ₓFeₓPO₄, LiCoPO₄/LiCo_{1-α-β}(M₁)_{α}(M₂)_{β}PO₄, and LiMn_{1.5}Ni_{0.5}O₄/LiMn_{1.5}Ni_{0.5-α} (M₃)_{α}O₄, where M represents elements in the transition metal group and boron group, M₁ and M₂ independently represent elements in the transition metal group and boron group, M₃ represents elements in the transition metal group and boron group, 0.04< α <0.12, 0.04<β<0.12, and 0.08<x<0.12.

In another embodiment, the positive electrode comprises a blend of NMC and LiMn₁₋ₓFeₓPO₄ (referred to herein as LMFP) or a blend of LMO, NMC and LMFP.

In another embodiment, the active material for the positive electrode includes LiₓFe_{1-y}M_{y}PO₄, LiₓMn_{2-y-z}M'_{y}M"_{z}O₄, LiₓMn_{1-y-z}M'_{y}M"_{z}PO₄, or LiₓM_{1-y-z}M'_{y}M"_{z}M'''_{w}O₂, wherein 0≤x≤1.4, 0≤y≤0.6, 0≤z≤0.2, 0≤w≤0.2, and M, M', M" and M'" each independently represent Li, B, Mg, Al, Si, Ca, Ti, V, Cr, Mn, Fe, Co, Ni, Cu, Zn, Y, Zr, Nb or Mo.

The structure of the positive electrode of the LTO-based cells described herein is not particularly limited. The positive electrode is typically obtained by disposing a positive electrode material on a current collector. To facilitate the connection between the active material and the collector, and for optimal electrical characteristics, the positive electrode material may include one or more additive, such as a binder, a conductive carbon, and a long chain carbon. The binder, conductive carbon and the long chain carbon are known in the art. The binder, conductive carbon and the long chain carbon described in detail above regarding the negative electrode material can be used in the positive electrode.

For the positive electrode current collector, preferable materials include aluminum and aluminum alloy.

### Electrolyte

The use of a solvent for the electrolyte is well known, and the choice of solvent is not particularly limited. Suitable solvents include propylene carbonate (C₄H₆O₃) ("PC"), di-ethyl carbonate ((C₂H₅O)₂CO) ("DEC"), a blend of gamma-butyrolactone (C₄H₆O₂) ("γ-BL") and gamma-valerolactone (C₅H₈O₂) ("γ-VL"), and a blend of PC, γ-BL and γ-VL. Other solvents that may be used include di-methyl carbonate (C₃H₆O₃) ("DMC"), ethyl-methyl carbonate (C₄H₈O₃) ("EMC"), acetonitrile (C₂H₃N), and propionitrile (C₃H₅N).

The electrolyte of the LTO-based cells described herein also includes the impedance reducing additive. The impedance reducing additive is selected so as to form a stable interface layer on the LTO-based negative electrode during a first formation cycle of the cell, wherein the stable interface layer on the negative electrode significantly reduces impedance growth on the positive electrode over the cycle life, particularly when the cells are operated/stored at elevated temperatures. Herein, the elevated temperatures are considered to be temperatures over 35 °C, such as 40 °C, 45 °C, etc., which are the temperatures at which LTO-based cells experience detrimental impedance growth over the cycle life.

In a preferred embodiment, the impedance growth reducing additive is fluoroethylene carbonate (C₃H₃FO₃) (or FEC). By adding FEC to the electrolyte, a LiF deposit material can be formed on the negative electrode during the formation cycle, which is described in more detail below. Despite the insulating properties of LiF, a stable interface layer that includes a layer of LiF deposit material significantly reduces impedance growth on the positive electrode over cycle life-and thereby beneficially provides a smaller net impedance growth on the battery-particularly when the battery is operated and/or stored at elevated temperatures.

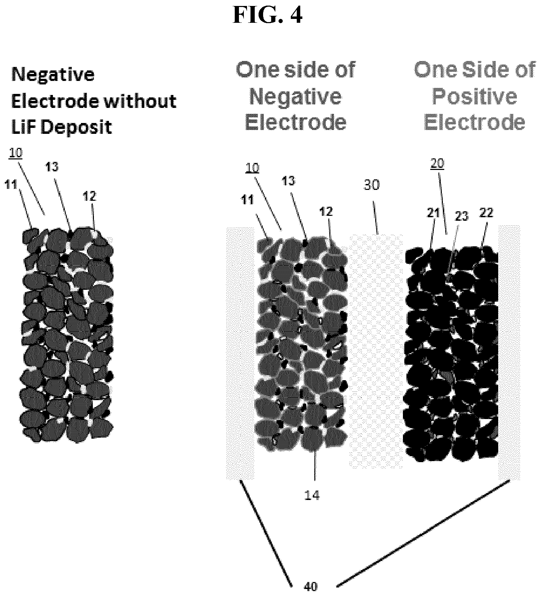

When the stable interface layer includes a LiF deposit material, a layer of the LiF deposit material is generally less than 1 µm in thickness. The LiF deposit material is preferably formed on the surface of the LTO material, as shown in FIG. 4. In a preferred embodiment, the stable interface layer forms a continuous layer over the exposed surfaces of the negative electrode that contact the electrolyte. For example, in FIG. 4, the LiF deposit material is shown as a continuous layer on the LTO material of the negative electrode.

The impedance reducing additive is preferably present in the electrolyte in an amount of 5% by weight or less based on the total weight of the electrolyte. More preferably, the impedance reducing additive is present in the electrolyte in an amount of 4% by weight or less based on the total weight of the electrolyte.

In another embodiment, the impedance reducing additive may also include a blend of FEC and VC, or a blend of FEC and VEC. When VC is used in combination with FEC, for example, the stable interface layer includes an organic material, in addition to the LiF deposit. Not being bound by any theory, the organic material of the stable interface layer includes one or more of FEC, VC, VEC, ethylene carbonate (C₃H₄O₃) ("EC"), or poly(vinyl carbonate) ("poly(VC)").

In an alternative embodiment to those described above, the impedance reducing additive is VC or VEC. In such an embodiment, the stable interface layer includes an organic material.

In addition to the impedance growth reducing additive, the electrolyte may also comprise one or more low temperature esters to improve low temperature (e.g., temperatures lower than - 20°C) power output. Suitable low temperature esters include, for example, methyl butyrate (C₅H₁₀O₂) ("MB"), ethyl acetate (C₄H₈O₂) ("EA"), or ethyl benzoate (C₉H₁₀O₂)("EB").

The electrolyte also may contain a lithium salt. A preferred lithium salt is LiBF₄. Other suitable salts include, for example, LiPF₆, lithium bis(trifluoromethane)sulfonamide (CF₃SO₂NLiSO₂CF₃) ("LiTFSi"), lithium bis(oxalato)borate (LiB(C₂O₄)₂) ("LiBOB"), LiC10₄, and the like. The preferred concentration of the lithium salt is 1.0M to 1.3M.

### Separator

It is well known that lithium-ion rechargeable cells generally contain a separator between the negative electrode and the positive electrode. A typical separator is a porous film made of polyethylene ("PE"), polypropylene ("PP"), a composite film made of PE and PP layers, or cellulose fibers.

### Preferred Embodiments

A cross-sectional view of an exemplary LTO-based cell is shown in FIG. 4. In the exemplary cell, the negative electrode 10 includes as the negative electrode material an LTO material 11 as the active material, along with a binder 12 and a conductive diluent 13. In addition, a LiF deposit 14 is shown disposed on the surface of the LTO material 11. The positive electrode 20 includes as the positive electrode material a metal oxide 21, a binder 22, and a conductive diluent 23. Aluminum (Al) foil current collectors 40 are provided for the negative and positive electrodes. A separator 30 is disposed between the negative and positive electrodes.

In a preferred embodiment, the LTO-based cell is one of the following exemplary embodiments 1-15 set forth in Table 1.

**Table 1**

| | **Negative electrode** | | **Positive electrode** | | **Electrolyte** | | |
|---|---|---|---|---|---|---|---|
| **Ex** | **active material** | **binder or additive** | **active material** | **binder or additive** | **solvents** | **additives** | **salts** |
| 1 | Li₄Ti₅O₁₂ | PVDF+AB+VGCF+CNT | LMO | PVDF+AB+VGCF+CNT | PC:DEC | FEC+VC | LiBF₄ |
| 2 | Li₄Ti₅O₁₂ | PVDF+AB+VGCF | LMO | PVDF+AB+VGCF | PC:DEC | FEC+VEC | LiBF₄ |
| 3 | Li₄Ti₅O₁₂ | PVDF+AB+CNT | LMO | PVDF+AB+CNT | PC:DEC | FEC | LiPF₆ |
| 4 | Li₄Ti₅O₁₂ | PVDF+AB+CNT+VGCF | LMO | PVDF+AB+VGCF+CNT | PC: γ-BL: γ-VL | FEC | LiBF₄ |
| 5 | Li₄Ti₅O₁₂ | PVDF+AB+VGCF+CNT | LMO | PVDF+AB+VGCF+CNT | PC: γ-BL | FEC+VC | LiPF₆ |
| 6 | Li₄Ti₅O₁₂ | PVDF+AB+VGCF+CNT | LMO/NMC | PVDF+AB+VGCF+CNT | γ-BL: γ-VL | FEC | LiPF₆ |
| 7 | Li₄Ti₅O₁₂ | PVDF+AB+VGCF+CNT | LMO/NMC | PVDF+AB+VGCF+CNT | PC: γ-BE: γ-VL | FEC | LiBF₄ |
| 8 | Li₄Ti₅O₁₂ | PVDF+AB+VGCF+CNT | LMO/NMC | PVDF+AB+VGCF+CNT | γ-BL: | FEC+VC | LiBF₄ |
| 9 | Li₄Ti₅O₁₂ | PVDF+AB+VGCF+CNT | LMO/LMFP | PVDF+AB+VGCF+CNT | γ-VL: | FEC | LiPF₆ |
| 10 | Li₄Ti₅O₁₂ | PVDF+AB+VGCF+CNT | LMO/NMC | PVDF+AB+VGCF+CNT | γ-BL: γ-VL | FEC+ VEC | LiBF₄ |
| 11 | Li₄Ti₅O₁₂ | PVDF+AB+VGCF+CNT | LMO/NMC/LMFP | PVDF with co-polymer + AB + CNT | PC: γ-BL: γ-VL | FEC | LiBF₄ |
| 12 | Li₄Ti₅O₁₂ | PVDF+AB+VGCF+CNT | NMC/LMFP | PVDF with co-polymer + AB + VGCF | PC: γ-BE: γ-VL | FEC | LiBF₄ |
| 13 | Li₄Ti₅O₁₂ | PVDF+AB+VGCF+CNT | LMO/NCA | P[VDF-TFE] + AB + VGCF | PC: γ-BL: γ-VL | FEC+VC | LiBF₄ |
| 14 | Li₄Ti₅O₁₂ | PVDF+AB+VGCF+CNT | LMFP/NCA | PVDF with co-polymer + AB + VGCF | PC:DEC | FEC+VC | LiPF₆ |
| 15 | Li₄Ti₅O₁₂ | PVDF+AB+VGCF+CNT | LMO/NCA/NMC | PVDF with co-polymer + AB + VGCF | γ-BL: γ-VL : MB | FEC+VC | LiBF₄ |

### First Formation Cycle

The method of making the lithium-ion cell with LTO-based chemistry described herein includes a first formation cycle during which the potential of the negative electrode is held below the reduction potential of the impedance reducing additive in the electrolyte for a sufficient length of time to reduce the impedance growth reducing additive and form a stable interface layer on the surface of the negative electrode. The cell is designed in such a manner that during the first formation cycle, the potential of the negative electrode versus a lithium standard is less than the reduction potential of the impedance growth reducing additive. In a preferred embodiment, the cell is designed in such a manner that the potential of the negative electrode does not fall below the reduction potential of the impedance growth reducing additive in any formation cycles after the first formation cycle.

The typical potential of an LTO electrode versus a lithium standard ("LTO vs. Li") is about 1.5V. This potential is higher than the reduction potential of the preferred impedance growth reducing additive described herein, i.e., FEC. In a preferred embodiment, during the first formation cycle, the potential of the negative electrode versus a lithium standard is in the range of from 0.1-1.15V, and is within a range of from 0.85-1.15V in a more preferred embodiment, and is within a range of from 0.85-1.1V in a more preferred embodiment, and is within a range of from 0.95-1.05 in the most preferred embodiments. The above ranges of LTO vs. Li potential are achieved by charging the cell during the first formation cycle to a voltage higher than the normal operating voltage for the cell. Due to the characteristics of the LTO vs. Li potential during lithiation (decreasing the LTO vs. Li potential), when a cell is designed with a certain negative to positive capacity ratio, a slight overcharge can cause the LTO vs. Li potential to drop from the typical 1.5V to below 1.15V. Additionally, the ratio of the negative electrode initial capacity ("cycle 1 capacity") to the positive electrode initial capacity ("cycle 1 capacity") (the "negative/positive ratio") should be less than 1 to ensure the LTO vs. Li voltage can reach below 1.15V during the first formation cycle. More preferably, the negative/positive ratio is between 0.8 and 0.95.

The first formation cycle is performed for a period of time of about 15 minutes to 48 hours, preferably 30 minutes to 24 hours, most preferably 1 hour to 12 hours. However, these ranges are not exclusive. The first formation cycle is performed for a period of time that is sufficient to form a stable interface layer on the surface of the negative electrode, which is typically about 1 hour.

### EXAMPLES

### Examples 1-3

Three 10 Ah prismatic cells with NMC (1,1,1) as the positive electrode (cathode) and LTO as the negative electrode (anode) were fabricated. The electrolyte for each cell contained the following: 1.0 M LiBF₄ in PC: γ-BL:EA (1:1:3) with 1 wt% of FEC added. The current collectors of both electrodes were aluminum foil for this cell construction. The negative/positive ratio was less than 1. The cells were then subjected to a first formation cycle, during which the potential of the negative electrode versus a lithium standard was maintained at 1.1 V or less for 1 hour.

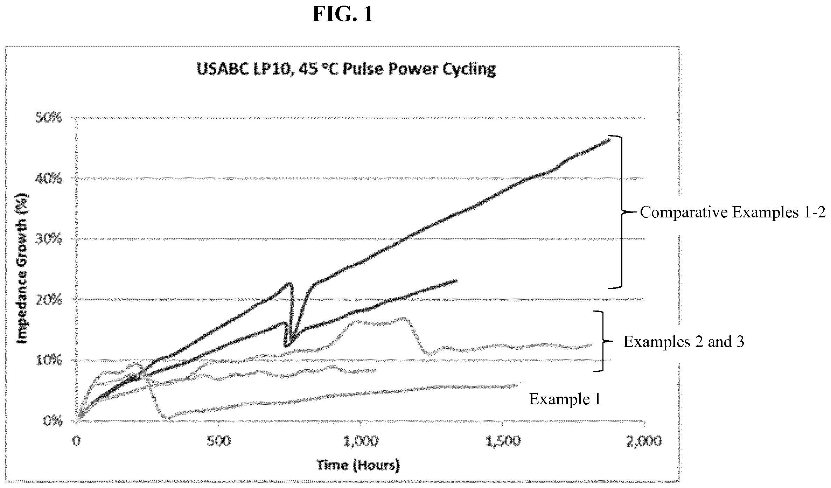

During the first formation cycle, a stable interface layer including a LiF deposit material was formed on the negative electrode. The cells were then cycled at 45 °C under USABC pulse cycling profile: at 50% state of charge (SOC, 2.3V), discharge for 59 seconds at 1.3C, followed with 1 second discharge at 6.5C; charge at 2.7C to 50% SOC (2.3V). The impedance growth vs. time (in hours) is provided in FIG. 1.

### Comparative Examples 1 and 2

Two 10 Ah prismatic cells with NMC (1,1,1) andLTO were fabricated. The electrolyte for each cell contained the following: 1.0 M LiBF₄ in EC: PC: EMC (1:1:3). The cells were cycled at 45 °C under USABC pulse cycling profile: at 50% SOC (2.3V), discharge for 59 second at 1.3C, followed with 1 second discharge at 6.5C; charge at 2.7C to 50% SOC (2.3V). The impedance growth vs. time (in hours) is shown in FIG. 1.

### Analysis

After cycling the cells of Examples 1-3 in a 45 °C environment, the cells were taken apart and the positive and negative electrodes were used to make NMC vs. Li cells and LTO vs. Li cells. Lithium metal was used as a standard electrode for the cells. The cells were filled with the following electrolyte: 1.0M LiBF₄ in PC: γ-BL:EA (1:1:3). The cells were cycled at 0.1 C rate with 15 second, 1C pulses at various cells voltages which correspond to various state-of-charge (SOC) of the cells.

The same procedure was followed for the cells of Comparative Examples 1-2.

Additionally, cells with new NMC and LTO electrodes were also constructed, to be used as control/reference cells. Lithium metal was used as a standard electrode for these cells. The cells were filled with the following electrolyte: 1.0M LiBF₄ in PC: γ-BL:EA (1:1:3). The cells were cycled at 0.1 C rate with 15 second, 1 C pulses at various cells voltages which correspond to various state-of-charge (SOC) of the cells.

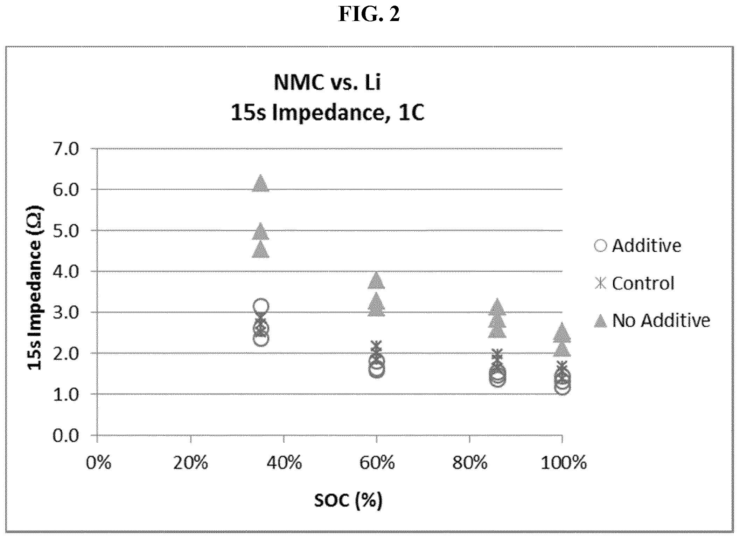

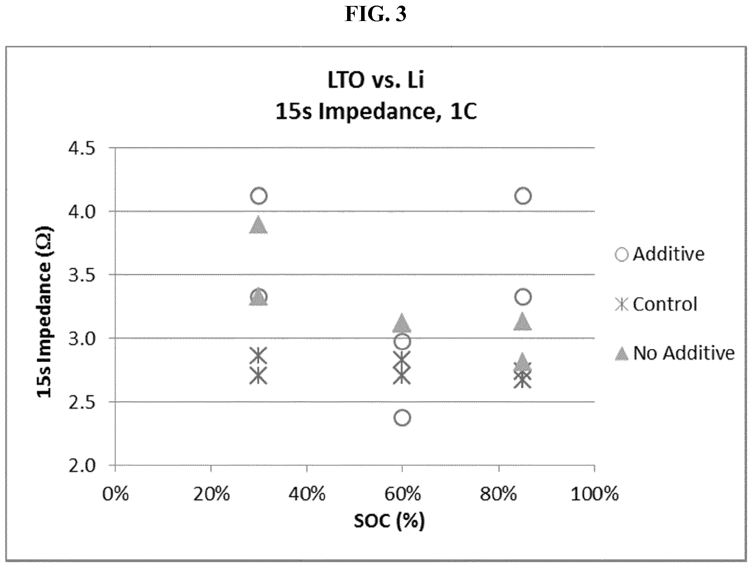

FIG. 2 and FIG. 3 show the change of electrode impedance that the FEC additive contributed. As shown by the figures, the FEC additive in Examples 1-3 prevented impedance growth on the cathode while cycling the cells at 45 °C as compared with Comparative Examples 1 and 2. Specifically, as shown in FIG. 2, the cathodes made from the batteries of Examples 1-3 showed little to no impedance growth as compared with the control cathodes. On the other hand, the cathodes made from the prismatic cells of Comparative Examples 1 and 2 demonstrated impedance growth as compared with the control cathodes, as is expected for lithium ion batteries operating at elevated temperatures (i.e., the cycling temperature of Comparative Examples 1 and 2 was 45 °C).

In accordance with the above description, a lithium-ion cell or battery with LTO-based chemistry having lowered impedance growth at elevated temperatures has been realized. LTO is mostly used for its high rate/power charge capability as compared to graphite. The lowered impedance growth allows the LTO-based cells described herein to maintain their high rate and power capability after being subjected to high temperature environment. Accordingly, the LTO-based cells described herein would not require a cooling system to maintain a low temperature (< 35°C) operating and storage environment.

## Claims

1. A lithium-ion battery, comprising:
a positive electrode;
a negative electrode comprising lithium titanate oxide Li₄Ti₅O₁₂ and a stable interface layer disposed on a surface of the negative electrode, said stable interface layer comprising a LiF deposit;
an electrolyte comprising a solvent and an impedance growth reducing additive selected from the group consisting of :
- fluoroethylene carbonate,
- a mixture of fluororethylene carbonate and vinyl carbonate,
- a mixture of fluoroethylene carbonate and vinyl ethylene carbonate,
- vinyl carbonate, and
- vinyl ethylene carbonate ; and
a separator disposed between the positive electrode and the negative electrode,
**characterized in that** the ratio of the negative electrode initial capacity to the positive electrode initial capacity is less than 1.

2. The lithium-ion battery according to Claim 1, wherein the impedance growth reducing additive comprises fluoroethylene carbonate (C₃H₃FO₃).

3. The lithium-ion battery according to Claim 2, wherein the impedance growth reducing additive further comprises vinyl carbonate (C₃H₂O₃) or vinyl ethylene carbonate (C₅H₆O₃).

4. The lithium-ion battery according to Claim 1, wherein a content of the impedance growth reducing additive in the electrolyte is from 1 wt% to 5 wt% based on the total weight of the electrolyte.

5. The lithium-ion battery according to Claim 1, wherein the stable interface layer further comprises an organic material.

6. The lithium-ion battery according to Claim 1, wherein the positive electrode comprises LiMn₂O₄.

7. The lithium-ion battery according to Claim 6, wherein the positive electrode further comprises LiMO₂, where M represents NiₓMn_{y}Co_{z}, 0.3<x<0.55, 0.3<y<0.4, and 0.14<z<0.34 or M represents Ni_{0.8}CO_{0.5}Al_{0.05}.

8. The lithium-ion battery according to Claim 1, wherein the stable interface layer is formed by holding a potential of the negative electrode below a reduction potential of the impedance reducing additive during a first formation cycle.

9. The lithium-ion battery according to Claim 8, wherein the impedance growth reducing additive is fluoroethylene carbonate (C₃H₃FO₃).

10. The lithium-ion battery according to Claim 8, wherein the potential of the negative electrode is held below the reduction potential of the impedance reducing additive for a sufficient amount of time to reduce the impedance growth reducing additive and form the stable interface layer.

11. The lithium-ion battery according to Claim 8, wherein the potential of the negative electrode versus a lithium standard is less than or equal to 1.1V during the first formation cycle.

12. A method of making a lithium-ion battery according to claim 1, the method comprising:
forming a lithium ion cell comprising a negative electrode comprising lithium titanate Li₄Ti₅O₁₂, a positive electrode, an electrolyte comprising an impedance growth reducing additive selected from the group consisting of:
fluoroethylene carbonate,
a mixture of fluororethylene carbonate and vinyl carbonate,
a mixture of fluoroethylene carbonate and vinyl ethylene carbonate,
vinyl carbonate, and
vinyl ethylene carbonate;
and a separator disposed between the positive electrode and the negative electrode;
the ratio of the negative electrode initial capacity to the positive electrode initial capacity being less than 1 and
holding a potential of the negative electrode below a reduction potential of the impedance growth reducing additive during a first formation cycle.

13. The method of Claim 12, wherein the impedance growth reducing additive comprises fluoroethylene carbonate (C₃H₃FO₃).

14. The method of Claim 13, wherein the impedance growth reducing further comprises vinyl carbonate (C₃H₂O₃) or vinyl ethylene carbonate (C₅H₆O₃)

15. The method of Claim 12, wherein the content of the impedance growth reducing additive in the electrolyte is 1 wt% to 5 wt% based on the total weight of the electrolyte.

16. The method of Claim 12, wherein the positive electrode comprises LiMn₂O₄.

17. The method of Claim 16, wherein the positive electrode further comprises LiMO₂, where M represents NiₓMn_{y}Co_{z}, 0.3<x<0.55, 0.3<y<0.4, and 0.14<z<0.34 or M represents Ni_{0.8}Co_{0.15}Al_{0.05}.

18. The method of Claim 12, wherein during the step of holding, the potential of the negative electrode versus a lithium standard is less than 1.1V.

19. The method of Claim 12, wherein the potential of the negative electrode is held below the reduction potential of the impedance growth reducing additive for a period of time of from 15 minutes to 48 hours.

## Patentansprüche

1. Lithiumionenbatterie, umfassend:
eine positive Elektrode;
eine negative Elektrode umfassend Lithiumtitanatoxid, Li₄Ti₅O₁₂, und eine stabile Grenzflächenschicht, die auf einer Oberfläche der negativen Elektrode angeordnet ist, wobei die stabile Grenzflächenschicht eine LiF-Ablagerung umfasst;
einen Elektrolyten, der ein Lösungsmittel und ein das Impedanzwachstum reduzierendes Zusatzmittel umfasst, ausgewählt aus der Gruppe bestehend aus:
- Fluorethylencarbonat,
- einer Mischung von Fluorethylencarbonat und Vinylcarbonat,
- einer Mischung von Fluorethylencarbonat und Vinylethylencarbonat,
- Vinylcarbonat und
- Vinylethylencarbonat; und
einen Separator, der zwischen der positiven Elektrode und der negativen Elektrode angeordnet ist,
**dadurch gekennzeichnet, dass** das Verhältnis der anfänglichen Kapazität der negativen Elektrode zu der anfänglichen Kapazität der positiven Elektrode weniger als 1 beträgt.

2. Lithiumionenbatterie nach Anspruch 1, wobei das das Impedanzwachstum reduzierende Zusatzmittel Fluorethylencarbonat (C₃H₃FO₃) umfasst.

3. Lithiumionenbatterie nach Anspruch 2, wobei das das Impedanzwachstum reduzierende Zusatzmittel ferner Vinylcarbonat (C₃H₂O₃) oder Vinylethylencarbonat (C₅H₆O₃) umfasst.

4. Lithiumionenbatterie nach Anspruch 1, wobei ein Gehalt des das Impedanzwachstum reduzierenden Zusatzmittels in dem Elektrolyt 1 Gew.-% bis 5 Gew.-%, auf das Gesamtgewicht des Elektrolyten bezogen, beträgt.

5. Lithiumionenbatterie nach Anspruch 1, wobei die stabile Grenzflächenschicht ferner ein organisches Material umfasst.

6. Lithiumionenbatterie nach Anspruch 1, wobei die positive Elektrode LiMn₂O₄ umfasst.

7. Lithiumionenbatterie nach Anspruch 6, wobei die positive Elektrode ferner LiMO₂ umfasst, wobei M NiₓMn_{y}Co_{z} darstellt, 0,3<x<0,55, 0,3<y<0,4 und 0,14<z<0,34 oder M Ni_{0,8}CO_{0,15}A1_{0,05} darstellt.

8. Lithiumionenbatterie nach Anspruch 1, wobei die stabile Grenzflächenschicht durch Halten eines Potentials der negativen Elektrode unter einem Reduktionspotential des das Impedanzwachstum reduzierenden Zusatzmittels während des ersten Bildungszyklus gebildet wird.

9. Lithiumionenbatterie nach Anspruch 8, wobei das das Impedanzwachstum reduzierende Zusatzmittel Fluorethylencarbonat (C₃H₃FO₃) ist.

10. Lithiumionenbatterie nach Anspruch 8, wobei das Potential der negativen Elektrode unter dem Reduktionspotential des das Impedanzwachstum reduzierenden Zusatzmittels für eine ausreichend lange Zeitspanne gehalten wird, um das das Impedanzwachstum reduzierende Zusatzmittel zu reduzieren und eine stabile Grenzflächenschicht zu bilden.

11. Lithiumionenbatterie nach Anspruch 8, wobei das Potential der negativen Elektrode im Vergleich zu einem Lithiumstandard weniger als oder gleich 1,1 V während des ersten Bildungszyklus beträgt.

12. Verfahren zur Herstellung einer Lithiumionenbatterie nach Anspruch 1, wobei das Verfahren Folgendes umfasst:
Bilden einer Lithiumionenzelle, umfassend eine negative Elektrode umfassend Lithiumtitanatoxid, Li₄Ti₅O₁₂, eine positive Elektrode, einen Elektrolyten umfassend ein das Impedanzwachstum reduzierendes Zusatzmittel, ausgewählt aus der Gruppe bestehend aus:
Fluorethylencarbonat,
einer Mischung von Fluorethylencarbonat und Vinylcarbonat,
einer Mischung von Fluorethylencarbonat und Vinylethylencarbonat,
Vinylcarbonat und
Vinylethylencarbonat; und
einen Separator, der zwischen der positiven Elektrode und der negativen Elektrode angeordnet ist,
wobei das Verhältnis der anfänglichen Kapazität der negativen Elektrode zu der anfänglichen Kapazität der positiven Elektrode weniger als 1 beträgt und
Halten eines Potentials der negativen Elektrode unter einem Reduktionspotential des das Impedanzwachstum reduzierenden Zusatzmittels während eines ersten Bildungszyklus.

13. Verfahren nach Anspruch 12, wobei das das Impedanzwachstum reduzierende Zusatzmittel Fluorethylencarbonat (C₃H₃FO₃)umfasst

14. Verfahren nach Anspruch 13, wobei das Impedanzwachstumreduzieren ferner Vinylcarbonat (C₃H₂O₃) oder Vinylethylencarbonat (C₅H₆O₃) umfasst.

15. Verfahren nach Anspruch 12, wobei der Gehalt des das Impedanzwachstum reduzierenden Zusatzmittels 1 Gew.-% bis 5 Gew.-%, auf das Gesamtgewicht des Elektrolyten bezogen, beträgt.

16. Verfahren nach Anspruch 12, wobei die positive Elektrode LiMn₂O₄ umfasst.

17. Verfahren nach Anspruch 16, wobei die positive Elektrode ferner LiMO₂ umfasst, wobei M NiₓMn_{y}Co_{z} darstellt, 0,3<x<0,55, 0,3<y<0,4 und 0,14<z<0,34 oder M Ni_{0,8}Co_{0,15}Al_{0,05} darstellt.

18. Verfahren nach Anspruch 12, wobei, während des Schritts des Haltens, das Potential der negativen Elektrode im Vergleich mit einem Lithiumstandard weniger als 1,1 V beträgt.

19. Verfahren nach Anspruch 12, wobei das Potential der negativen Elektrode unter dem Reduktionspotential des das Impedanzwachstum reduzierendes Zusatzmittels für eine Zeitspanne von 15 Minuten bis 48 Stunden gehalten wird.

## Revendications

1. Batterie lithium-ion comprenant :
une électrode positive ;
une électrode négative comprenant du titanate de lithium Li₄Ti₅O₁₂ et une couche d'interface stable disposée sur une surface de l'électrode négative, ladite couche d'interface stable comprenant un dépôt de LiF ;
un électrolyte comprenant un solvant et un additif réduisant la croissance d'impédance choisi dans le groupe constitué par :
- le carbonate de fluoroéthylène,
- un mélange de carbonate de fluoroéthylène et de carbonate de vinyle,
- un mélange de carbonate de fluoroéthylène et de carbonate de vinyléthylène,
- le carbonate de vinyle, et
- le carbonate de vinyléthylène ; et
un séparateur disposé entre l'électrode positive et l'électrode négative,
**caractérisée en ce que** le rapport de la capacité initiale de l'électrode négative à la capacité initiale de l'électrode positive est inférieur à 1.

2. Batterie lithium-ion selon la revendication 1, dans laquelle l'additif réduisant la croissance d'impédance comprend du carbonate de fluoroéthylène (C₃H₃FO₃).

3. Batterie lithium-ion selon la revendication 2, dans laquelle l'additif réduisant la croissance d'impédance comprend en outre du carbonate de vinyle (C₃H₂O₃) ou du carbonate de vinyléthylène (C₅H₆O₃).

4. Batterie lithium-ion selon la revendication 1, dans laquelle la teneur en l'additif réduisant la croissance d'impédance dans l'électrolyte est de 1 % en poids à 5 % en poids par rapport au poids total de l'électrolyte.

5. Batterie lithium-ion selon la revendication 1, dans laquelle la couche d'interface stable comprend en outre un matériau organique.

6. Batterie lithium-ion selon la revendication 1, dans laquelle l'électrode positive comprend du LiMn₂O₄.

7. Batterie lithium-ion selon la revendication 6, dans laquelle l'électrode positive comprend en outre du LiMO₂ où M représente NiₓMn_{y}Co_{z}, 0,3 < x < 0,55, 0,3 < y < 0,4, et 0,14 < z < 0,34 ou M représente Ni_{0,8}Co_{0,15}Al_{0,05}.

8. Batterie lithium-ion selon la revendication 1, dans laquelle la couche d'interface stable est formée par maintien du potentiel de l'électrode négative inférieur au potentiel de réduction de l'additif réduisant l'impédance durant un premier cycle de formation.

9. Batterie lithium-ion selon la revendication 8, dans laquelle l'additif réduisant la croissance d'impédance est le carbonate de fluoroéthylène (C₃H₃FO₃).

10. Batterie lithium-ion selon la revendication 8, dans laquelle le potentiel de l'électrode négative est maintenu en dessous du potentiel de réduction de l'additif réduisant l'impédance pendant une période de temps suffisante pour réduire l'additif réduisant la croissance d'impédance et former la couche d'interface stable.

11. Batterie lithium-ion selon la revendication 8, dans laquelle le potentiel de l'électrode négative par rapport à une référence en lithium est inférieur ou égal à 1,1V durant le premier cycle de formation.

12. Méthode de fabrication d'une batterie lithium-ion selon la revendication 1, la méthode comprenant :
la formation d'un élément lithium-ion comprenant une électrode négative comprenant du titanate de lithium Li₄Ti₅O₁₂, une électrode positive, un électrolyte comprenant un additif réduisant la croissance d'impédance choisi dans le groupe constitué par :
- le carbonate de fluoroéthylène,
- un mélange de carbonate de fluoroéthylène et de carbonate de vinyle,
- un mélange de carbonate de fluoroéthylène et de carbonate de vinyléthylène,
- le carbonate de vinyle, et
- le carbonate de vinyléthylène ;
et un séparateur disposé entre l'électrode positive et l'électrode négative ;
le rapport de la capacité initiale de l'électrode négative à la capacité initiale de l'électrode positive étant inférieur à 1, et
le maintien du potentiel de l'électrode négative en dessous du potentiel de réduction de l'additif réduisant la croissance d'impédance durant un premier cycle de formation.

13. Méthode selon la revendication 12, dans laquelle l'additif réduisant la croissance d'impédance comprend du carbonate de fluoroéthylène (C₃H₃FO₃).

14. Méthode selon la revendication 13, dans laquelle l'additif réduisant la croissance d'impédance comprend en outre du carbonate de vinyle (C₃H₂O₃) ou du carbonate de vinyléthylène (C₅H₆O₃).

15. Méthode selon la revendication 12, dans laquelle la teneur en l'additif réduisant la croissance d'impédance dans l'électrolyte est de 1 % en poids à 5 % en poids par rapport au poids total de l'électrolyte.

16. Méthode selon la revendication 12, dans laquelle l'électrode positive comprend du LiMn₂O₄.

17. Méthode selon la revendication 16, dans laquelle l'électrode positive comprend en outre du LiMO₂ où M représente NiₓMn_{y}Co_{z}, 0,3 < x < 0,55, 0,3 < y < 0,4, et 0,14 < z < 0,34 ou M représente Ni_{0,8}Co_{0,15}Al_{0,05}.

18. Méthode selon la revendication 12, dans laquelle, durant l'étape de maintien, le potentiel de l'électrode négative par rapport à une référence en lithium est inférieur à 1,1 V.

19. Méthode selon la revendication 12, dans laquelle le potentiel de l'électrode négative est maintenu inférieur au potentiel de réduction de l'additif réduisant la croissance d'impédance pendant une période de temps allant de 15 minutes à 48 heures.
